# EUROPÄISCHE PATENTSCHRIFT

(11) **EP 3 778 299 B1**
(45) Veröffentlichungstag und Bekanntmachung des Hinweises auf die Patenterteilung: **07.09.2022**
(21) Anmeldenummer: 20183943.8
(22) Anmeldetag: 03.07.2020
(51) Int. Cl.: B60P 3/025, B60P 3/32, E04B 1/343, E04H 1/12

(54) **TRANSPORTABLES, MODULARES CONTAINERGEBÄUDE FÜR MILITÄRISCHE UND/ODER HUMANITÄRE FELDEINSÄTZE, INSBESONDERE ALS CONTAINERBASIERTE FELDKÜCHE**
TRANSPORTABLE MODULAR CONTAINER BUILDING FOR MILITARY AND / OR HUMANITARIAN FIELD DEVICES, IN PARTICULAR AS A CONTAINER-BASED FIELD KITCHEN
BÂTIMENT EN CONTENEURS TRANSPORTABLE ET MODULAIRE POUR SERVICE EN CAMPAGNE MILITAIRE ET/OU HUMANITAIRE, EN PARTICULIER EN TANT QUE CUISINE DE CAMPAGNE BASÉE SUR CONTENEURS

(30) Priorität: 06.08.2019 DE 202019104324 U
(43) Veröffentlichungstag der Anmeldung: 17.02.2021
(73) Patentinhaber: Kärcher Futuretech GmbH, 71409 Schwaikheim (DE)
(72) Erfinder: Siegle, Gunter, 73630 Remshalden-Geradstetten (DE); Pock, Siegfried, 71404 Korb (DE); Merz, Erwin, 71334 Waiblingen (DE); Spaan, Michael, 71106 Magstadt (DE); Schweizer, Stefan, 71522 Backnang (DE)
(74) Vertreter: Witte, Weller & Partner Patentanwälte mbB

(56) Entgegenhaltungen:
- EP-B1- 2 906 757
- WO-A1-93/07348
- DE-U1- 20 118 360
- US-A- 4 601 509
- US-B1- 6 393 775
- Kärcher: "KCC 500 mobile kitchen catering container", , 31. Juli 2019 (2019-07-31), Seiten 1-2, XP055762434, Gefunden im Internet: URL:https://s1.kaercher-media.com/media/fi le/116004/data-sheet-kcc-500.pdf [gefunden am 2020-12-23]

## Beschreibung

Die vorliegende Erfindung betrifft ein transportables, modulares Containergebäude für militärische und/oder humanitäre Feldeinsätze und insbesondere eine containerbasierte Feldküche mit einem solchen Containergebäude.

EP 2 768 341 B1 offenbart ein transportables, modulares Küchensystem zur Verpflegung einer Vielzahl von Menschen, das sich speziell an die Anforderungen von Hilfsorganisationen richtet, die Hilfseinsätze in Katastrophengebieten durchführen. Derartige Hilfseinsätze können sich über Wochen hinziehen und sind mit hohen körperlichen Anstrengungen verbunden, so dass der Wunsch nach einem mobilen und robusten Küchensystem bestand, mit dem eine größere Anzahl von Personen über einen längeren Zeitraum hinweg verpflegt werden kann. Andererseits finden solche Hilfseinsätze häufig in sehr unwegsamem Gelände statt und sie müssen zum Teil mit kleinen finanziellen Etats finanziert werden. Dementsprechend ist das Küchensystem aus EP 2 768 341 B1 daraufhin optimiert, einen Transport ohne größere Lastwagen und Hebewerkzeuge zu ermöglichen. Die Art und Menge der Speisen, die mit diesem bekannten Küchensystem zubereitet werden können, sind begrenzt. Des Weiteren besitzt dieses bekannte Küchensystem keine Gebäudewände und -dächer und bietet daher keinen komfortablen Wetterschutz.

EP 2 906 757 B1 offenbart ein gattungsgemäßes Containergebäude, das prinzipiell als mobile Feldküche, als mobile Sanitäranlage oder als mobiler Operationssaal eingerichtet werden kann. Das Containergebäude ermöglicht einen vergleichsweise komfortablen Betrieb an einem Einsatzort und eignet sich daher gut für monatelange Feldeinsätze. Das Containergebäude wird aus zumindest zwei Stahlcontainern gebildet, die mit einander gegenüberliegenden, zu öffnenden Längsseiten und mit einem definierten Abstand zueinander angeordnet werden. Zur Bildung einer gemeinsamen Raumzelle mit einer durchgehenden Innenbodenfläche wird ein Bodenelement in dem Zwischenraum zwischen den beiden Containern angeordnet. Die Inneneinrichtung dieses bekannten Containergebäudes kann je nach Einsatzzweck variieren und ist in EP 2 906 757 B1 nicht im Detail beschrieben.

WO 2016/020018 A1 offenbart einen transportablen Container mit einer Inneneinrichtung, die zur Wasseraufbereitung oder Wasserversorgung ausgebildet ist. Die Inneneinrichtung beinhaltet eine Vielzahl von Rohrleitungen, die an den seitlichen (vertikalen) Innenwänden des Containers angeordnet sind und zum einen Prozessmedien transportieren und zum anderen eine Trägerstruktur für eine Vielzahl von Funktionsmodulen bilden, wie etwa Pumpenmodule, Filtrationsmodule, Messmodule oder Steuermodule.

EP 3 480 135 A1 offenbart ein weiteres gattungsgemäßes Containergebäude für militärische und/oder humanitäre Einsätze, das beispielsweise als Küchengebäude, Schlafgebäude, als Führungs- oder Leitstand mit einer büroartigen Inneneinrichtung oder, wie im Detail dargestellt, als Sanitärgebäude eingerichtet sein kann. Das Containergebäude der EP 3 480 135 A1 ist auf Basis eines sogenannten Integral-Reefer-Containers aufgebaut. Derartige Container werden üblicherweise zur Beförderung von verderblichen Waren im Seefrachtverkehr, wie etwa zur Beförderung von Lebensmitteln oder Medikamenten verwendet. Das Dach und die Seitenwände des Integral-Reefer-Containers können nur begrenzte Lasten tragen, was eine Montage der Inneneinrichtung an den Seitenwänden und dem Containerdach erschwert. WO 93/07348 A1 offenbart den Oberbegriff von Anspruch 1.

Die angegebenen Dokumente enthalten jeweils noch eine Vielzahl von Verweisen auf weitere Containergebäude, die zum Teil aus mehreren miteinander verbundenen ISO-Containern gebildet werden. Energiesparaspekte finden bei solchen Containergebäude selten Beachtung. Es ist daher eine Aufgabe der vorliegenden Erfindung, ein transportables, modulares Containergebäude für militärische und/oder humanitäre Feldeinsätze anzugeben, das einen möglichst komfortablen, effizienten und energiesparenden Betrieb ermöglicht. Es ist insbesondere eine Aufgabe der Erfindung, eine transportable Feldküche mit einem solchen Containergebäude anzugeben.

Gemäß einem Aspekt der vorliegenden Erfindung wird diese Aufgabe durch ein Containergebäude der eingangs genannten Art gelöst, mit einem ersten und einem zweiten begehbaren Container, die in zumindest einer definierten Ausrichtung relativ zueinander an einem Einsatzort positionierbar sind, mit einem Stromerzeugungsaggregat mit einer Verbrennungskraftmaschine und einem ersten Wärmetauscher, der mit der Verbrennungskraftmaschine thermisch gekoppelt ist, wobei das Stromerzeugungsaggregat mit der Verbrennungskraftmaschine und dem ersten Wärmetauscher in dem ersten Container montiert ist, mit einer brennerbetriebenen Standheizung, mit einem mit Flüssigkeit gefüllten ersten Rohrleitungskreis, an den der erste Wärmetauscher und die Standheizung angeschlossen sind, um die Flüssigkeit zu erhitzen, wobei der erste Rohrleitungskreis einen ersten Rohrleitungsteilkreis aufweist, der in dem ersten Container montiert ist, und einen zweiten Rohrleitungsteilkreis, der in dem zweiten Container montiert ist, und wobei der erste Rohrleitungsteilkreis und der zweite Rohrleitungsteilkreis jeweils zwei Koppelanschlüsse aufweisen, über die der erste Rohrleitungsteilkreis und der zweite Rohrleitungsteilkreis lösbar zu einem ersten Gesamtkreis koppelbar sind, wenn der erste und der zweite Container an dem Einsatzort positioniert sind, mit einer ersten Pumpe, die in dem ersten Rohrleitungskreis angeordnet und dazu eingerichtet ist, die Flüssigkeit in dem ersten Rohrleitungskreis zu zirkulieren, wobei die erste Pumpe mit dem Stromerzeugungsaggregat elektrisch verbunden ist, mit einem Frischwassertank zum Bereitstellen von Frischwasser, mit einem Frischwasserauslass, der in dem zweiten Container montiert ist, mit einem zweiten Rohrleitungskreis, der den Frischwassertank und den Frischwasserauslass verbindet, und mit einem zweiten Wärmetauscher, der in dem ersten Rohrleitungskreis und in dem zweiten Rohrleitungskreis angeordnet ist, um Frischwasser aus dem Frischwassertank mithilfe der Flüssigkeit aus dem ersten Rohrleitungskreis aufzuheizen.

Das neue Containergebäude besitzt ein vorzugsweise fest in dem ersten Container montiertes Stromerzeugungsaggregat mit einer Verbrennungskraftmaschine, die im Sinne einer Kraft-Wärme-Kopplung einerseits zur Stromerzeugung verwendet wird. Dementsprechend ist beispielsweise die erste Pumpe mit dem Stromerzeugungsaggregat elektrisch verbunden, so dass das Stromerzeugungsaggregat den erforderlichen Betriebsstrom für die erste Pumpe bereitstellen kann. Andererseits wird die Abwärme der Verbrennungskraftmaschine hier vorteilhaft verwendet, um eine Flüssigkeit in dem ersten Rohrleitungskreis zu erhitzen. Über den zweiten Wärmetauscher wird die Abwärme der Verbrennungskraftmaschine vorteilhaft verwendet, um Frischwasser aus einem Frischwassertank aufzuheizen. Ein Frischwasserauslass, an dem das aufgeheizte Frischwasser entnommen werden kann, ist hier in dem zweiten Container angeordnet. Dementsprechend besitzt das neue Containergebäude gewissermaßen ein "Fernwärmesystem", das einerseits einen energieeffizienten Betrieb und andererseits flexible nutzbare Funktionsräume ermöglicht. Besonders vorteilhaft kann das neue Containergebäude als Feldküche einen relativ großen Koch- und Arbeitsbereich für das Küchenpersonal zur Verfügung stellen, der von technischen Versorgungsaggregaten, wie etwa dem Stromerzeugungsaggregat freigehalten ist..

Das neue Containergebäude ist jedoch nicht auf die Kraft-Wärme-Kopplung zum Erzeugen von Heizenergie beschränkt. Vielmehr besitzt das neue Containergebäude darüber hinaus eine brennerbetriebene Standheizung, die ebenfalls an den ersten Rohrleitungskreis angeschlossen ist, der die Fernwärme-Versorgungsleitung bildet. Das neue Containergebäude ermöglicht daher einen bestimmungsgemäßen und energieeffizienten Betrieb auch dann, wenn das integrierte Stromerzeugungsaggregat nicht betrieben wird. Dies kann beispielsweise bei größeren Feldlagern der Fall sein, wenn das neue Containergebäude Betriebsstrom von einer externen Stromversorgung erhält, beispielsweise von einem städtischen oder regionalen Stromversorgungsnetz oder von einem Generator, der den Versorgungsstrom für ein gesamtes Feldlager zentral erzeugt. Das neue Containergebäude ermöglicht daher einen flexiblen, energieeffizienten und zugleich komfortablen Einsatz in unterschiedlichen Einsatzszenarien, wobei eine Kraft-Wärme-Kopplung insbesondere bei einem autarken Betrieb abseits der Zivilisation vorteilhaft möglich ist. Die oben genannte Aufgabe ist daher vollständig gelöst.

In einer bevorzugten Ausgestaltung besitzt das Containergebäude ferner eine Bypass-Rohrleitung, die dazu eingerichtet ist, den ersten Rohrleitungsteilkreis oder den zweiten Rohrleitungsteilkreis kurzzuschließen. In einigen Ausführungsbeispielen ist die Bypass-Rohrleitung in dem ersten Container montiert und dazu eingerichtet, den ersten Rohrleitungsteilkreis kurzzuschließen. In anderen Ausführungsbeispielen ist die Bypass-Rohrleitung in dem zweiten Container montiert und dazu eingerichtet, den zweiten Rohrleitungsteilkreis kurzzuschließen. In weiteren Ausführungsbeispielen ist eine entsprechende Bypass-Rohrleitung in dem ersten Container montiert, um den ersten Rohrleitungsteilkreis wahlweise kurzzuschließen, und eine weitere Bypass-Rohrleitung ist in dem zweiten Container montiert, um den zweiten Rohrleitungsteilkreis kurzzuschließen. Vorteilhaft ist die brennerbetriebene Standheizung in dem Container montiert, in dem auch die Bypass-Leitung montiert ist.

Die Ausgestaltungen ermöglichen eine sehr energieeffiziente Aufheizung der Flüssigkeit in den Rohrleitungsteilkreisen bereits vor dem Zusammenbau des neuen Containergebäudes, beispielsweise während des Transports der Container zu einem Einsatzort. Dementsprechend ermöglichen diese Ausgestaltungen eine schnellere Inbetriebnahme des neuen Containergebäudes am Einsatzort. Bei einem Aufbau des Containergebäudes als Feldküche können Speisen beispielsweise schon während des Transports vorgewärmt und/oder regeneriert werden. Bevorzugt wird die Flüssigkeit in den entsprechend kurzgeschlossenen Rohrleitungsteilkreisen mithilfe der Standheizung aufgeheizt, da eine Standheizung im Vergleich zu der Verbrennungskraftmaschine des Stromerzeugungsaggregats einen höheren thermischen Wirkungsgrad besitzt. Prinzipiell ist jedoch auch der Betrieb des Stromerzeugungsaggregats und eine Beheizung der Flüssigkeit in dem ersten Rohrleitungsteilkreis während des Transports des ersten Containers zum Einsatzort denkbar. Die Standheizung könnte dann in dem zweiten Container montiert sein.

In einer weiteren Ausgestaltung besitzt das Containergebäude eine wiederaufladbare Pufferbatterie, insbesondere in Form einer unterbrechungsfreien Stromversorgung, die mit dem Stromerzeugungsaggregat elektrisch verbunden ist.

Elektrisch verbunden bedeutet hier, dass die Pufferbatterie wahlweise als Ersatz für oder als Ergänzung zu dem Stromerzeugungsaggregat verwendet werden kann, um Betriebsstrom für die elektrisch betriebenen Komponenten in dem neuen Containergebäude zur Verfügung zu stellen. In einigen vorteilhaften Ausführungsbeispielen sind das Stromerzeugungsaggregat und die Pufferbatterie elektrisch so miteinander verbunden, dass das Stromerzeugungsaggregat die Pufferbatterie laden kann und/oder zusammen mit der Pufferbatterie zur Stromversorgung der elektrischen Komponenten des neuen Containergebäudes verwendet werden kann.

Die Integration einer Pufferbatterie in dem neuen Containergebäude ermöglicht einen autarken Betrieb des neuen Containergebäudes auch dann, wenn das Stromerzeugungsaggregat ausgeschaltet ist. Dies kann beispielsweise während des Transports der Container zum Einsatzort oder auch am Einsatzort der Fall sein, wenn aufgrund von anderen Energiequellen keine Kraft-Wärme-Kopplung benötigt wird, beispielsweise in heißen Einsatzgebieten. In bevorzugten Ausführungsbeispielen ist die Pufferbatterie in dem ersten Container angeordnet, was den Vorteil besitzt, dass in dem zweiten Container ein noch größerer Arbeitsbereich realisiert werden kann.

In einer weiteren Ausgestaltung besitzt das Containergebäude ein Photovoltaikmodul und/oder einem Windgenerator. Das Photovoltaikmodul und/oder der Windgenerator sind vorteilhaft mit der Pufferbatterie elektrisch verbunden, um diese zu laden.

Die Ausgestaltung macht es möglich, regenerative Energiequellen für einen noch energieeffizienteren und vor allem, autarken Betrieb des neuen Containergebäudes zu nutzen.

In einer weiteren Ausgestaltung besitzt zumindest einer der Container ein Containerdach und/oder eine Containerwand, und zumindest einer der Rohrleitungsteilkreise ist im Bereich des Containerdaches und/oder der Containerwand montiert.

In vorteilhaften Ausführungsbeispielen sind die Container Stahlcontainer mit einem Containerdach und Containerwänden mit außenliegenden Stahlplatten. In bevorzugten Ausführungsbeispielen sind der erste und/oder der zweite Rohrleitungsteilkreis jeweils im Bereich einer solchen außenliegenden Stahlplatte montiert. Bevorzugt können die Rohrleitungsteilkreise an der Containerinnenseite des Containerdachs montiert sein. In diesen Ausgestaltungen bildet der zumindest eine Rohrleitungsteilkreis zusammen mit dem Containerdach und/oder der Containerwand einen Sonnenkollektor. Die Flüssigkeit in dem Rohrleitungskreis kann vorteilhaft mit Sonnenenergie aufgeheizt werden, was einen noch energieeffizienteren Betrieb des neuen Containergebäudes ermöglicht. Die Ausgestaltung macht sich die Bauart von Containergebäuden aus Stahlcontainern vorteilhaft zu nutze.

In einigen Ausführungsbeispielen ist der zweite Rohrleitungsteilkreis im Bereich des Containerdaches des zweiten Containers montiert, während der erste Rohrleitungsteilkreis entfernt von dem Containerdach des ersten Containers angeordnet ist. In diesen Ausführungsbeispielen wirkt nur der zweite Rohrleitungsteilkreis als Sonnenkollektor, was vorteilhaft dazu beiträgt, den Arbeitsraum in dem zweiten Container abzukühlen, da die Flüssigkeit hier im Bereich des Containerdaches des zweiten Containers entstehende Hitze abführt.

In einer weiteren Ausgestaltung verläuft der zumindest eine Rohrleitungsteilkreis im Bereich des Containerdaches und/oder der Containerwand mäanderförmig.

Diese Ausgestaltung ermöglicht eine großflächige Nutzung der Sonnenenergie zum Aufheizen der in dem ersten Rohrleitungskreis zirkulierenden Flüssigkeit. Dementsprechend trägt diese Ausgestaltung zu einem sehr energieeffizienten Betrieb des Containergebäudes vorteilhaft bei.

In einer weiteren Ausgestaltung besitzt das Containergebäude ein separates Solarthermiemodul, das an den ersten Rohrleitungskreis angeschlossen ist. In einigen Ausführungsbeispielen kann das separate Solarthermiemodul außerhalb des Containergebäudes platziert werden und es ist bevorzugt über eine flexible Schlauchleitung an den ersten Rohrleitungskreis angeschlossen. Während des Transports kann das separate Solarthermiemodul in einem der Container gelagert werden. In weiteren Ausführungsbeispielen kann das separate Solarthermiemodul an dem Containerdach und/oder einer Containerwand von zumindest einem der beiden Container angeordnet sein. Separat ist das Solarthermiemodul dieser Ausgestaltung, weil in Ergänzung zu den Rohrleitungsteilkreisen in den Containern tritt.

Ein separates Solarthermiemodul, das vorteilhaft ein kommerziell erhältliches Solarthermiemodul sein kann, trägt dazu bei, die Heizleistung unter Verwendung von regenerativen Energiequellen weiter zu erhöhen und einen noch energieeffizienteren, autarken Betrieb des neuen Containergebäudes zu ermöglichen.

In einer weiteren Ausgestaltung besitzt das Containergebäude eine Wärmepumpe, insbesondere eine Luft-Luft-Wärmepumpe, die an den ersten Rohrleitungskreis angeschlossen ist.

Auch diese Ausgestaltung trägt vorteilhaft dazu bei, einen energieeffizienten Betrieb mit Ausnutzung regenerativer Energiequellen zu ermöglichen. In den bevorzugten Ausführungsbeispielen ist die Wärmepumpe elektrisch mit dem Stromerzeugungsaggregat und/oder der Pufferbatterie verbunden, was zu einem energieeffizienten, autarken Betrieb des neuen Containergebäudes vorteilhaft beiträgt. In den bevorzugten Ausführungsbeispielen ist die Wärmepumpe eine kommerziell erhältliche Wärmepumpe.

In einer weiteren Ausgestaltung besitzt das Containergebäude zumindest ein Luftheizgerät, das an den ersten Rohrleitungskreis angeschlossen ist. In bevorzugten Ausführungsbeispielen besitzt das Containergebäude zumindest ein Luftheizgerät in dem zweiten Container, der den Frischwasserauslass und den Arbeitsbereich für das Küchenpersonal beherbergt. In weiteren Ausführungsbeispielen ist zumindest ein Luftheizgerät in dem ersten Containergebäude montiert, was besonders vorteilhaft ist, wenn auch der Frischwassertank in dem ersten Container angeordnet ist. Das Luftheizgerät kann in diesem Fall dazu beitragen, das Frischwasser vor Einfrieren am Einsatzort zu bewahren.

In einer weiteren Ausgestaltung ist die brennerbetriebene Standheizung und/oder der Frischwassertank in dem ersten Container montiert-

In den bevorzugten Ausführungsbeispielen beherbergt der erste Container die Mehrzahl der technischen Versorgungseinrichtungen, die der Versorgung des Containergebäudes mit Strom, Wasser und Wärme dienen. Vorzugsweise sind in dem ersten Container daher auch die Pufferbatterie und ein Abwassertank angeordnet. Der zweite Container stellt demgegenüber in den bevorzugten Ausführungsbeispielen einen möglichst großen Arbeitsbereich für das Einsatzpersonal zur Verfügung, beispielsweise für die Köche im Falle einer Feldküche. Die Ausgestaltung besitzt den Vorteil, dass der Arbeitsbereich in dem zweiten Container weiträumig und ergonomisch gestaltet werden kann und - insbesondere im Fall einer Feldküche - leichter hygienisch gereinigt werden kann.

In einer weiteren Ausgestaltung ist der zweite Wärmetauscher in dem zweiten Container montiert.

Abweichend von dem vorher Gesagten ist es in einigen Ausführungsbeispielen vorteilhaft, den zweiten Wärmetauscher in dem zweiten Container zu montieren, weil eine definierte Wassertemperatur an dem Frischwasserauslass so einfacher und effizienter gewährleistet werden kann. In bevorzugten Ausführungsbeispielen beinhaltet das Containergebäude eine Steuereinheit, insbesondere in Form eines Personal Computers (PC) mit einem kommerziell erhältlichen Betriebssystem (Microsoft Windows, MacOS, Linux u.a.) und/oder einer speicherprogrammierbaren Steuerung (SPS), wobei die Steuereinheit dazu eingerichtet ist, die Temperatur des Frischwassers am Frischwasserauslass mithilfe der Standheizung, des Stromerzeugungsaggregats und zumindest einem Mischventil auf etwa 55°C zu regeln.

In einer weiteren Ausgestaltung besitzt das Containergebäude (zumindest) ein Heißwasserkochgerät, das im Bereich des Frischwasserauslasses in dem zweiten Container montiert ist. Vorzugsweise besitzt das Heißwasserkochgerät einen integrierten Brenner, der vorteilhaft ein Dieselbrenner, Gasbrenner oder Vielstoffbrenner sein kann. In den bevorzugten Ausführungsbeispielen ist das Heißwasserkochgerät elektrisch mit der Pufferbatterie verbunden, so dass ein autarker Betrieb des Heißwasserkochgerätes mit Betriebsstrom von der Pufferbatterie und/oder dem Stromversorgungsaggregat möglich ist. Des Weiteren besitzt das Heißwasserkochgerät in den bevorzugten Ausführungsbeispielen eine Abgasrückführung mit einem (weiteren) Wärmetauscher, der an den ersten Rohrleitungskreis angeschlossen ist, so dass auch die Abwärme des Heißwasserkochgerätes für einen energieeffizienten Betrieb des Containergebäudes genutzt werden kann.

Ein vorteilhaftes Heißwasserkochgerät bietet die Kärcher Futuretech GmbH, Alfred-Schefenacker-Straße 1, 71409 Schwaikheim, Deutschland unter der Bezeichnung KCM 125 an. Die Montage eines solchen Heißwasserkochgerätes in dem zweiten Container im Bereich des Frischwasserauslasses trägt zu einem energieeffizienten und komfortablen Betrieb des neuen Containergebäudes als Feldküche bei, da das Heißwasserkochgerät im Betrieb bereits mit dem über den zweiten Wärmetauscher vorgewärmten Frischwasser befüllt werden kann. Infolgedessen trägt diese Ausgestaltung dazu bei, die Garzeiten beim Zubereiten von Speisen zu reduzieren.

In einer weiteren Ausgestaltung besitzt das Containergebäude zumindest eines der folgenden Küchengeräte: Spülbecken, Spülmaschine, Bratgerät, Grillgerät und/oder Kombidämpfer, wobei das zumindest eine Küchengerät in dem zweiten Container angeordnet ist und, vorzugsweise, mit dem zweiten Rohrleitungskreis verbunden ist.

Ein bevorzugter Kombidämpfer wird von der Kärcher Futuretech GmbH unter der Bezeichnung KCS 15 angeboten. Ein bevorzugtes Bratgerät wird von der Kärcher Futuretech GmbH unter der Bezeichnung KFP 70 angeboten. Die Ausstattung des Containergebäudes mit einem oder mehreren der genannten Küchengeräte ermöglicht einen variantenreichen Kochbetrieb. Aufgrund der Aufteilung der Küchengeräte und technischen Versorgungseinrichtungen auf den ersten und zweiten Container ist ferner ein sehr effizienter und zugleich komfortabler Einsatz am Einsatzort möglich.

In einer weiteren Ausgestaltung besitzt das Containergebäude zumindest einen Kühlschrank, der vorzugsweise in dem ersten Container angeordnet ist. In einigen vorteilhaften Ausführungsbeispielen besitzt das Containergebäude mehrere Kühlschränke und ein zentrales Kühlaggregat, das über einen dritten Rohrleitungskreis mit den mehreren Kühlschränken verbunden ist und die Innenräume der mehreren Kühlschränke kühlt. Bevorzugt besitzt der zumindest eine Kühlschrank einen Kompressor, der elektrisch mit dem Stromversorgungsaggregat und der Pufferbatterie verbunden ist.

Die Anordnung von einem oder mehreren Kühlschränken in dem ersten Container trägt weiterhin vorteilhaft dazu bei, einen energieeffizienten Betrieb des neuen Containergebäudes als containerbasierte Feldküche zu ermöglichen. Zum einen kann die Abwärme des zumindest einen Kühlschranks in dem ersten Container vorteilhaft genutzt werden, um die Flüssigkeit in dem ersten Rohrleitungskreis weiter zu erhitzen. Andererseits hat sich die Anordnung von großvolumigen Kühlschränken in dem ersten Container als vorteilhaft erwiesen, um einerseits eine große Lagerfläche und andererseits einen großen Arbeitsbereich für das Küchenpersonal zu ermöglichen. Ein zentrales Kühlaggregat für mehrere Kühlschränke, die über einen dritten Rohrleitungskreis miteinander verbunden sind, trägt weiterhin vorteilhaft dazu bei, im Einsatzbetrieb entstehende Abwärme energieeffizient zu nutzen.

In einer weiteren Ausgestaltung sind die Koppelanschlüsse des ersten Rohrleitungsteilkreises und/oder des zweiten Rohrleitungsteilkreises räumlich nebeneinander in einer Dockingstation angeordnet. In einigen bevorzugten Ausführungsbeispielen bilden die Koppelanschlüsse an jedem der beiden Container jeweils eine Dockingstation derart, dass die jeweils zwei Koppelanschlüsse mit einer jeweils gemeinsamen Koppelbewegung angeschlossen werden können.

Die Ausgestaltung erleichtert den Aufbau des neuen Containergebäudes und trägt zu einer schnellen Inbetriebnahme am Einsatzort bei.

In einer weiteren Ausgestaltung besitzt das Containergebäude eine weitere Rohrleitung, die den zweiten Wärmetauscher mit dem Frischwassertank verbindet.

In dieser Ausgestaltung führt eine zweite Rohrleitung von dem Frischwasserauslass auf der Heißwasserseite des zweiten Wärmetauschers zu dem Frischwassertank, so dass ein geschlossener Kreislauf von dem Frischwassertank über den zweiten Wärmetauscher zurück zum Frischwassertank gebildet werden kann. In bevorzugten Ausführungsbeispielen ist eine zweite Pumpe in diesem Kreis angeordnet, vorzugsweise in dem zweiten Rohrleitungskreis, der von dem Frischwassertank zu dem zweiten Wärmetauscher führt. Die weitere Rohrleitung dieser Ausgestaltung kann vorteilhaft als Desinfektionsleitung genutzt werden, um den Frischwassertank und die Frischwasserleitung zu dem Kaltwasseranschluss des zweiten Wärmetauschers mit Heißwasser zu desinfizieren. In einigen Ausführungsbeispielen kann die Steuereinheit dazu eingerichtet sein, die Temperatur des Frischwassers am Ausgang des zweiten Wärmetauschers wahlweise auf mehr als 80°C zu regeln, um eine vorteilhafte Desinfektion des Frischwassertanks und des zweiten Rohrleitungskreises zu ermöglichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie er durch die Ansprüche definiert ist, zu verlassen.

Ausführungsbeispiele der Erfindung sind in der Zeichnung dargestellt und werden in der nachfolgenden Beschreibung näher erläutert. Es zeigen:
- Figur 1: eine perspektivische Ansicht eines bevorzugten Ausführungsbeispiels des neuen Containergebäudes,
- Figur 2: das Containergebäude aus Fig. 1 in einer weiteren Ansicht,
- Figur 3: ein funktionales Blockschaltbild des Containergebäudes aus Fig. 1 und 2,
- Figur 4: eine vereinfachte Schnittdarstellung des Containerdachs von dem Containergebäude aus Fig. 1 und 2,
- Figur 5: mäanderförmig verlaufende Rohrleitungen an dem Containerdach aus Fig. 4,
- Figur 6: eine vereinfachte Darstellung einer Dockingstation zum Koppeln von Rohrleitungsteilkreisen,
- Figur 7: das Containergebäude aus Fig. 1 in einer zweiten Aufstellvariante,
- Figur 8: das Containergebäude aus Fig. in einer dritten Aufstellvariante, und
- Figur 9: das Containergebäude aus Fig. 9 in einer vierten Aufstellvariante.

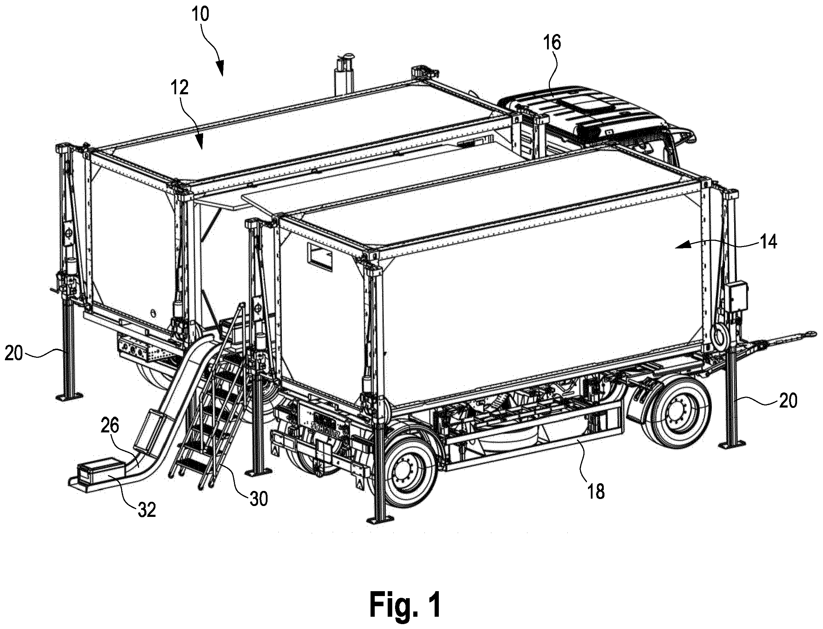

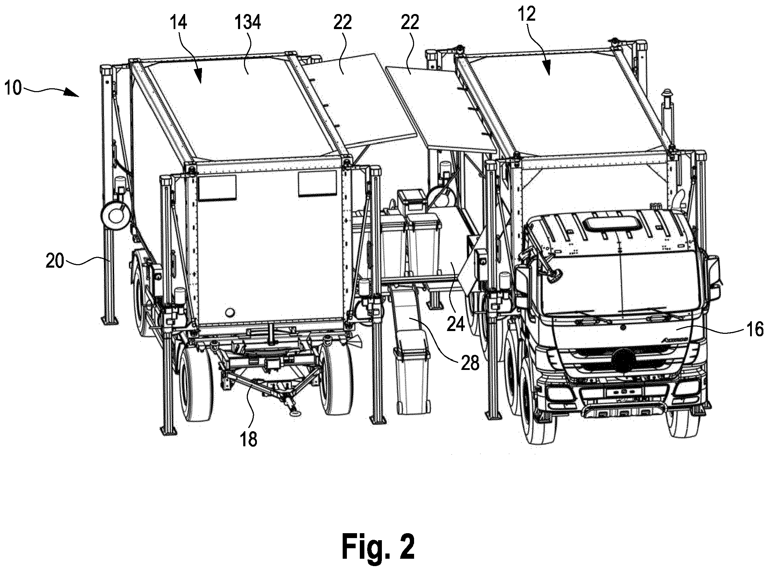

In den Fig. 1 und 2 ist ein bevorzugtes Ausführungsbeispiel des neuen Containergebäudes in seiner Gesamtheit mit der Bezugsziffer 10 bezeichnet. Das Containergebäude 10 ist in diesem Ausführungsbeispiel eine Feldküche, die zum Zubereiten von Speisen für eine Vielzahl von Menschen über einen längeren Zeitraum (mehrere Tage bis hin zu mehreren Monaten) unter Feldbedingungen ausgebildet ist.

Wie man in den Fig. 1 und 2 erkennen kann, beinhaltet das Containergebäude 10 in diesem Ausführungsbeispiel einen ersten Container 12 und einen zweiten Container 14. Die Container 12, 14 sind hier Stahlcontainer, deren Abmessungen beispielsweise der ISO-Norm 668 entsprechen. Beispielsweise kann es sich hier um 40-Fuß-ISO-Container aus Stahl handeln. Der erste Container 12 ist in diesem Ausführungsbeispiel auf einem Lastkraftwagen 16 angeordnet. Der zweite Container 14 ist in diesem Ausführungsbeispiel auf einem Anhänger 18 angeordnet, der an den Lastwagen 16 angehängt werden kann. Dementsprechend können die Container 12, 14 mithilfe des Lastwagens 16 und des Anhängers 18 an einen Einsatzort transportiert werden.

In den bevorzugten Ausführungsbeispielen sind die Container 12, 14 mithilfe von betriebsmäßig lösbaren Verschlüssen an dem Lastwagen 16 und dem Anhänger 18 befestigt, so dass die Container 12, 14 am Einsatzort von dem Lastwagen 16 und dem Anhänger 18 gelöst werden können. In dem in Fig. 1 und 2 dargestellten Ausführungsbeispiel besitzen die Container 12, 14 jeweils vier teleskopartig ausfahrbare Stützen 20, die es möglich machen, die Container 12, 14 auf dem Untergrund abzustützen und zu nivellieren, während sie noch auf dem Lastwagen 16 und dem Anhänger 18 angeordnet sind. Es ist in diesem Ausführungsbeispiel daher leicht möglich, die Container 12, 14 von dem Lastwagen 16 und dem Anhänger 18 zu lösen und den Lastwagen 16 bzw. den Anhänger 18 unter den abgestützten Containern 12, 14 wegzufahren. Alternativ oder ergänzend können die Container 12, 14 beispielsweise mit einem Gabelstapler oder einem Kran von dem Lastwagen 16 bzw. dem Anhänger 18 heruntergenommen werden. In einigen Ausführungsbeispielen können die Container 12, 14 daher Gabelstaplertaschen und/oder geeignete Kranhakenöffnungen (hier jeweils nicht dargestellt) besitzen.

In dem hier dargestellten Ausführungsbeispiel sind die Container 12, 14 mit einem definierten seitlichen Abstand parallel zueinander angeordnet, wobei jeder Container 12, 14 mit einer Längsseite zu dem jeweils anderen Container weist. Eine solche Anordnung der Container 12, 14 kann leicht erreicht werden, indem der Lastwagen 16 zunächst den Anhänger 18 an einer geeigneten Position an einem Einsatzort abstellt und anschließend parallel neben den Anhänger 18 gefahren wird.

Die Container 12, 14 besitzen in diesen bevorzugten Ausführungsbeispielen an ihren einander zuweisenden Längsseiten jeweils eine erste seitliche Klappe 22 und eine zweite seitliche Klappe 24. Die seitlichen Klappen 22, 24 erstrecken sich in den bevorzugten Ausführungsbeispielen über jeweils mehr als 50 % der seitlichen Containerlänge. Die seitlichen Klappen 22 können in diesem Ausführungsbeispiel nach oben hochgeklappt werden und somit im Einsatz die Dachfläche der Container 12, 14 vergrößern. Die seitlichen Klappen 24 können in den bevorzugten Ausführungsbeispielen seitlich nach unten geklappt werden und somit die Bodenfläche der Container 12, 14 vergrößern. Wie man in Fig. 2 erkennen kann, werden die Container 12, 14 in den bevorzugten Ausführungsbeispielen mit einem solchen seitlichen Abstand zueinander angeordnet, dass die ausgeklappten Klappen 24 einen Verbindungssteg zwischen den beiden Containern 12, 14 bilden, der als zusätzliche Stau- oder Arbeitsfläche genutzt werden kann. Die seitlichen Klappen 22 können diesen zusätzlichen Arbeitsbereich nach oben hin bedecken.

In einigen Ausführungsbeispielen (hier nicht dargestellt) kann zwischen den parallel zueinander angeordneten Containern 12, 14 eine Zeltplane verspannt werden, um den Zwischenraum zwischen den beiden Containern 12, 14 noch weiter gegen Wettereinflüsse zu schützen.

Wie man in den Fig. 1 und 2 erkennen kann, besitzt das Containergebäude 10 in diesem Ausführungsbeispiel eine erste Rutsche 26, eine zweite Rutsche 28 und eine Treppe 30, die jeweils an dem gemeinsamen Zwischenboden angeordnet sind, den die Klappen 24 bilden. Die erste Rutsche 26 ist hier dazu eingerichtet, sogenannte Thermobehälter 32, in denen zubereitete Speisen warmgehalten werden, Richtung Untergrund rutschen zu lassen. Wie man in Fig. 1 erkennen kann, ist die erste Rutsche 26 in diesem Ausführungsbeispiel neben der Treppe 30 angeordnet. Vorzugsweise sind die erste Rutsche 26 und die Treppe 30 entfernt von der Fahrerkabine des Lastwagens 16 an dem Zwischenboden befestigt, der mithilfe der Klappen 24 gebildet wird. In einigen bevorzugten Ausführungsbeispielen können die Klappen 24 Montageaufnahmen für die erste Rutsche 26 und die Treppe 30 aufweisen.

Die zweite Rutsche 28 ist in den bevorzugten Ausführungsbeispielen auf der gegenüberliegenden Seite des Zwischenbodens angeordnet. Vorzugweise besitzt die Klappe 24 des zweiten Containers 14 geeignete Montageaufnahmen zur Befestigung der zweiten Rutsche 28. Wie man in Fig. 2 erkennen kann, ist die zweite Rutsche 28 hier im Bereich der Fahrerkabine des Lastwagens 16 angeordnet. Die zweite Rutsche 28 dient in den bevorzugten Ausführungsbeispielen vorteilhaft dazu, Küchenabfälle weg zu transportieren.

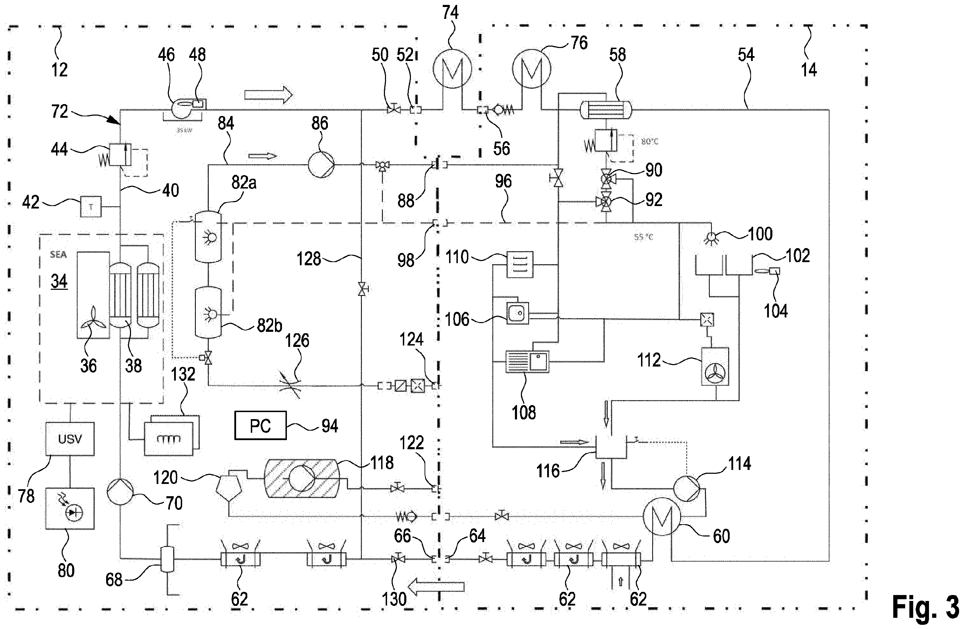

In Fig. 3 ist der erste Container bei der Bezugsziffer 12 und der zweite Container bei der Bezugsziffer 14 schematisch angedeutet. Der erste Container 12 beherbergt ein Stromerzeugungsaggregat (SAE) 34 mit einer Verbrennungskraftmaschine 36 und einem ersten Wärmetauscher 38, der mit der Verbrennungskraftmaschine 36 thermisch gekoppelt ist. Der Wärmetauscher 38 ist in einem ersten Rohrleitungsteilkreis 40 angeordnet, der mit einer geeigneten Flüssigkeit, wie etwa Glykol, gefüllt ist. Stromabwärts von dem Wärmetauscher 38 sind hier ein Temperatursensor 42, ein Überdruckventil 44 und eine Standheizung 46 mit einem Brenner 48 in dem ersten Rohrleitungsteilkreis 40 angeordnet. Der Rohrleitungsteilkreis 40 endet stromabwärts an einem Sperrventil 50 und einem Koppelanschluss 52. Der Koppelanschluss 52 ist bevorzugt an einer Außenseite des Containers 12 angeordnet und ermöglicht die Kopplung mit einem zweiten Rohrleitungsteilkreis 54, der in dem zweiten Container 14 angeordnet ist und einen passenden Koppelanschluss 56 zur Kopplung mit dem Koppelanschluss 52 des ersten Rohrleitungsteilkreises 40 besitzt.

Stromabwärts von dem Koppelanschluss 56 ist ein zweiter Wärmetauscher 58 in dem zweiten Rohrleitungsteilkreis 54 angeordnet. Vom Ausgang des zweiten Wärmetauschers 58 führt der zweite Rohrleitungsteilkreis stromabwärts über einen weiteren Wärmetauscher 60 und ein oder mehrere Luftheizgeräte 62 zu einem weiteren Koppelanschluss 64. Am Koppelanschluss 64 kann der zweite Rohrleitungsteilkreis 54 wieder mit dem ersten Rohrleitungsteilkreis 40 gekoppelt werden. Der erste Rohrleitungsteilkreis 40 besitzt dementsprechend einen weiteren Koppelanschluss 66 zur Kopplung mit dem Koppelanschluss 64. Von dem Koppelanschluss 66 führt der erste Rohrleitungsteilkreis 40 über weitere (optionale) Luftheizgeräte 62, einen optionalen Ausgleichsbehälter 68 und eine erste Pumpe 70 zurück zu dem ersten Wärmetauscher 38. Die gekoppelten Rohrleitungsteilkreise 40, 54 bilden somit einen gemeinsamen ersten Rohrleitungskreis 72, in dem die Flüssigkeit (z.B. Glykol) mithilfe der ersten Pumpe 70 zirkuliert werden kann.

Optional können eine Wärmepumpe 74 und/oder ein Solarthermiemodul 76 in dem ersten Rohrleitungskreis 72 angeordnet sein. Das Solarthermiemodul 76 ist hier innerhalb des zweiten Containers 14 dargestellt und kann beispielsweise in das Dach des Containers 14 integriert sein. Die Wärmepumpe 74 ist hier außerhalb von dem ersten Container 12 und dem zweiten Container 14 dargestellt und zwischen den Koppelanschlüssen 52, 56 angeschlossen. In einigen Ausführungsbeispielen kann die Wärmepumpe 74 eine Luft-Luft-Wärmepumpe sein, deren Kompressor mit Strom von dem Stromerzeugungsaggregat 34 (nicht dargestellt) versorgt wird. In anderen Ausführungsbeispielen kann anstelle oder in Ergänzung zu der Wärmepumpe 74 auch ein Solarthermiemodul außerhalb von dem ersten Container 12 und dem zweiten Container 14 in dem ersten Rohrleitungskreis 72 angeordnet sein. Vorzugsweise sind die optionale Wärmepumpe 74 und das optionale Solarthermiemodul 76 stromaufwärts von dem zweiten Wärmetauscher 58 in dem ersten Rohrleitungskreis 72 angeordnet.

Mit der Bezugsziffer 78 ist eine Pufferbatterie bezeichnet, die in einigen bevorzugten Ausführungsbeispielen als unterbrechungsfreie Stromversorgung (USV) ausgebildet ist. Die Pufferbatterie 78 kann in bevorzugten Ausführungsbeispielen mit einem Photovoltaikmodul 80 verbunden sein, das beispielsweise in das Containerdach des Containers 12 und/oder das Containerdach des Containers 14 integriert sein kann und/oder als externes Photovoltaikmodul außerhalb der Container 12, 14 positioniert werden kann. Die Pufferbatterie 78 ist elektrisch mit dem Stromerzeugungsaggregat 34 verbunden und kann in den bevorzugten Ausführungsbeispielen sowohl von dem Stromerzeugungsaggregat 34 als auch von dem Photovoltaikmodul 80 geladen werden. Ohne Photovoltaikmodul 80 wird die Pufferbatterie 78 im Wesentlichen mit dem Stromerzeugungsaggregat 34 geladen. Darüber hinaus kann der erste Container 12 in einigen Ausführungsbeispielen einen externen Stromanschluss (hier nicht gezeigt) besitzen, der es möglich macht, die Pufferbatterie 78 mit extern zugeführtem Strom zu laden. In den bevorzugten Ausführungsbeispielen sind sämtliche elektrisch betriebenen Aggregate und Komponenten, wie etwa die erste Pumpe 70 und die Standheizung 46 elektrisch mit dem Stromerzeugungsaggregat 34 und der Pufferbatterie 78 verbunden.

Mit den Bezugsziffern 82a, 82b sind hier zwei Frischwassertanks bezeichnet, die in einigen Ausführungsbeispielen an gegenüberliegenden Seitenwänden innerhalb des ersten Containers 12 angeordnet sind. Die Frischwassertanks 82a, 82b sind miteinander gekoppelt und bilden einen gemeinsamen Frischwassertank. Um eine möglichst gleichmäßige Gewichtsverteilung zu erreichen, ist die Aufteilung des Frischwassertanks in zwei Untertanks 82a, 82b vorteilhaft. In weiteren Ausführungsbeispielen kann ein einzelner Frischwassertank in dem Container 12 angeordnet sein. Alternativ oder ergänzend kann der Container 12 in einigen Ausführungsbeispielen einen externen Frischwasseranschluss (hier nicht dargestellt) an einer Containeraußenseite aufweisen, über den beispielsweise Frischwasser aus einer Frischwasseraufbereitungsanlage zugeführt werden kann.

Ein zweiter Rohrleitungskreis 84 führt von den Frischwassertanks 82a, 82b über einen weiteren Koppelanschluss 88 zu dem zweiten Wärmetauscher 58, so dass der Wärmetauscher 58 das Frischwasser aus den Tanks 82a, 82b mithilfe der Flüssigkeit in dem ersten Rohrleitungskreis aufheizen kann. In dem hier dargestellten, bevorzugten Ausführungsbeispiel ist eine zweite Pumpe 86 in dem ersten Container 12 und zwischen dem Frischwassertank 82a und dem Koppelanschluss 88 angeordnet, um das Frischwasser in dem zweiten Rohrleitungskreis zu dem Wärmetauscher 58 zu befördern.

An dem Frischwasserausgang des zweiten Wärmetauschers 58 sind in diesem Ausführungsbeispiel ein weiteres Überdruckventil, ein Umschaltventil (Dreiwegeventil) 90 und ein Mischventil 92 angeordnet. Das Mischventil 92 ist über einen Ventilanschluss mit der Kaltwasserseite des Rohrleitungskreises 84 verbunden und dazu eingerichtet, kaltes Frischwasser aus den Tanks 82a, 82b mit aufgeheiztem Frischwasser aus dem Wärmetauscher 58 zu mischen.

In den bevorzugten Ausführungsbeispielen ist in dem ersten Container 12 eine Steuereinheit 94 angeordnet, die dazu eingerichtet ist, die Wassertemperatur am Ausgang des Mischventils 92 im regelmäßigen Einsatzbetrieb auf etwa 55°C zu regeln. Dies ist eine bevorzugte Temperatur, bei der die Gefahr eines ungewolltes Verbrühens begrenzt ist. Mithilfe des Umschaltventils 90 kann das Mischventil 92 überbrückt werden und Heißwasser von dem Wärmetauscher 58 in eine Rohrleitung 96 eingespeist werden, die über einen weiteren Koppelanschluss 98 zu den Frischwassertanks 82a, 82b und auch zu einem Frischwasserauslass 100 führt. Mit der Überbrückung kann Heißwasser mit einer Temperatur von beispielsweise 80°C zur Desinfektion in die Rohrleitung 96 eingespeist werden. Der Frischwasserauslass 100 ist am Ausgang des (überbrückbaren) Mischventils 82 in dem zweiten Container 14 angeordnet und ermöglicht die Entnahme von aufgewärmtem Frischwasser, insbesondere zum Zubereiten von Speisen.

In dem hier dargestellten, bevorzugten Ausführungsbeispiel sind im Bereich des Frischwasserauslasses 100 ein oder mehrere Heißwasserkochgeräte 102 montiert. In bevorzugten Ausführungsbeispielen besitzt zumindest ein Heißwasserkochgerät 102 einen integrierten Brenner 104, der das Aufwärmen und/oder Regenerieren von Speisen auch während des Transports des Containers 14 ermöglicht, also getrennt von dem ersten Container 12. Optional kann in dem Container 14 eine weitere Pufferbatterie 78 (hier nicht dargestellt) angeordnet sein, die im Einsatzbetrieb mit der Pufferbatterie 78 in dem ersten Container 12 elektrisch verbunden werden kann.

Des Weiteren sind in dem hier dargestellten Ausführungsbeispiel ein Handwaschbecken 106, ein Spülbecken 108, ein Kombidämpfer 110 und eine Spülmaschine 112 an dem zweiten Rohrleitungskreis 84 angeschlossen, wobei das Handwaschbecken 106 und das Spülbecken 108 vorteilhaft sowohl einen Kaltwasseranschluss stromaufwärts von dem Wärmetauscher 58 als auch einen Heißwasseranschluss stromabwärts von dem Wärmetauscher 58 besitzen. Über eine weitere Pumpe 114, die in diesem Fall in dem zweiten Container 14 angeordnet ist, wird Abwasser von den Heißwasserkochgeräten 102, den Wasch- und Spülbecken 106, 108, dem optionalen Kombidämpfer 110 und der optionalen Spülmaschine 112 aus einem Abflussbecken 116 zu einem Abwassertank 118 geführt. In den bevorzugten Ausführungsbeispielen ist der Abwassertank 118 in dem ersten Container 12 angeordnet.

Vorteilhaft ist ein Fettabscheider 120 stromabwärts von dem Ausführungsbeispiel 118 in dem ersten Container 12 angeordnet. Der Wärmetauscher 60 ist in bevorzugten Ausführungsbeispielen in dem zweiten Container 14 stromabwärts von der Pumpe 114 angeordnet und macht es möglich, Abwärme des Abwassers in den ersten Rohrleitungskreis 72 zu überführen. Vorteilhaft besitzt der Abwassertank 118 an einer Außenseite des Containers 12 einen weiteren Koppelanschluss, über den der Abwassertank 118 entleert werden kann. Ein weiterer Koppelanschluss 124 ist über einen Druckminderer 126 mit den Frischwassertanks 82a, 82b verbunden und ermöglicht das Befüllen der Frischwassertanks 82a, 82b von außen.

Vorteilhaft ist hier ferner eine Bypass-Rohrleitung 128 in dem ersten Container 12 angeordnet. Die Bypass-Rohrleitung 128 ist dazu eingerichtet, den ersten Rohrleitungsteilkreis 40 im Bereich der Koppelanschlüsse 52, 66 kurzzuschließen. Vorteilhaft ist die Bypass-Rohrleitung 128 in diesem Ausführungsbeispiel stromaufwärts von dem Sperrventil 50 und stromaufwärts von einem weiteren Sperrventil 130 angeordnet, wobei die beiden Sperrventile 50, 130 im Bereich der Koppelanschlüsse 52, 66 angeordnet sind, um den ersten Rohrleitungsteilkreis 40 beispielsweise für den Transport des Containers 12 verschließen zu können. Die Bypass-Rohrleitung 128 macht es möglich, die Flüssigkeit in dem ersten Rohrleitungsteilkreis 40 aufzuheizen, bevor die Container 12, 14 in der hier dargestellten Weise miteinander gekoppelt werden, beispielsweise während des Transports der Container 12, 14. Am Einsatzort der Container 12, 14 steht in einem Fall bereits unmittelbar nach der Kopplung der Container 12, 14 aufgeheiztes Frischwasser zur Verfügung.

In bevorzugten Ausführungsbeispielen erfolgt die Erhitzung der Flüssigkeit in dem ersten Rohrleitungsteilkreis 40 in den Fällen, in denen die Bypass-Rohrleitung 128 den ersten Rohrleitungsteilkreis 40 kurzschließt, überwiegend mithilfe der Standheizung 46, da diese eine höhere thermische Heizleistung im Vergleich zu dem Stromerzeugungsaggregat 34 besitzt.

Mit der Bezugsziffer 132 sind hier ein oder mehrere Kühlschränke bezeichnet, die als Vorratsschränke zum Lagern von Lebensmitteln verwendet werden können. In den bevorzugten Ausführungsbeispielen sind mehrere Kühlschränke 132 im ersten Container 12 angeordnet. Die Kühlschränke 132 sind mit dem Stromerzeugungsaggregat 34 und/oder der Pufferbatterie 78 elektrisch verbunden. Darüber hinaus ist es in einigen Ausführungsbeispielen (hier nicht dargestellt) bevorzugt, wenn mehrere Kühlschränke 132 über eine gemeinsame Kühlmittelleitung an einen gemeinsamen Kompressor angeschlossen sind, wobei der Kompressor mit Strom von dem Stromerzeugungsaggregat 34 und/oder der Pufferbatterie 78 versorgt wird.

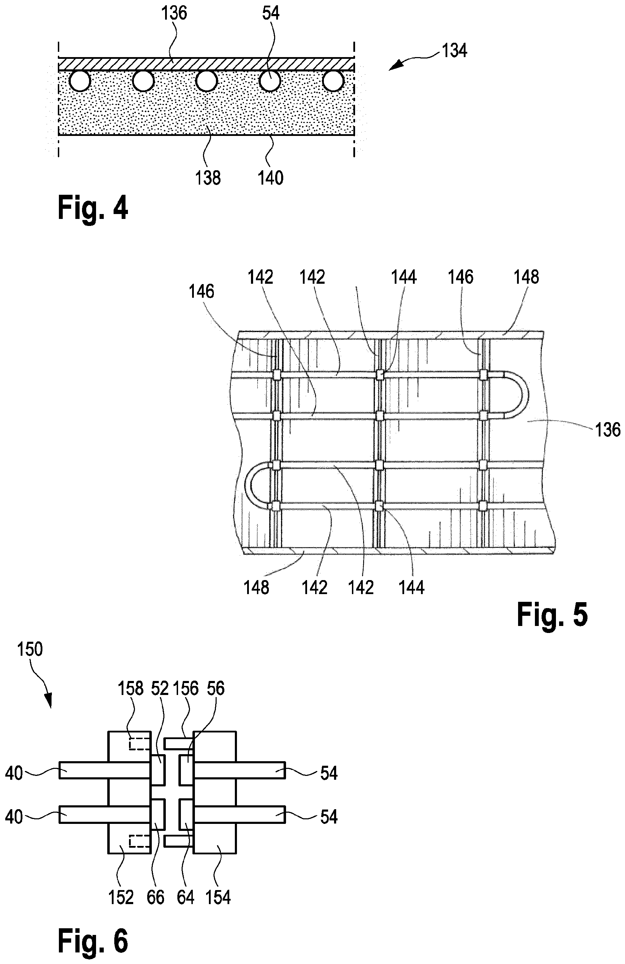

In Fig. 4 ist ein Ausschnitt aus dem Dach 134 des zweiten Containers 14 in einer vereinfachten Schnittansicht dargestellt. Das Containerdach 134 besitzt eine außenliegende Stahlplatte 136, unter der zum Containerinnenraum hin ein Isolationsmaterial 138 angeordnet ist. Das Isolationsmaterial 138 kann in einigen Ausführungsbeispielen eine Sandwichkonstruktion beinhalten. Beispielsweise kann das Isolationsmaterial 138 zur Containerinnenseite hin mit einer Aluminiumplatte 140 verbunden sein. Alternativ oder ergänzend zu der Stahlplatte 136 kann das Containerdach eine Außenseite aus einem anderen Werkstoffmaterial besitzen.

In den bevorzugten Ausführungsbeispielen ist der zweite Rohrleitungsteilkreis 54 mäanderförmig unterhalb der Stahlplatte 136 angeordnet, wie dies in einer Draufsicht (von der Containerinnenseite nach oben) in Fig. 5 beispielhaft dargestellt ist. Der zweite Rohrleitungsteilkreis 54 besitzt in diesem Ausführungsbeispiel eine Vielzahl von Rohrabschnitten 142, die weitgehend parallel zueinander verlaufen und unter der Dachfläche des Containerdaches 134 verteilt angeordnet sind. Die Rohrabschnitte 142 können in einigen Ausführungsbeispielen mithilfe von geeigneten Rohrhaltern 144 an Querstreben 146 befestigt sein. In einigen bevorzugten Ausführungsbeispielen verlaufen die Querstreben 146 von einer seitlichen Containerwand 148 zur gegenüberliegenden seitlichen Containerwand 148. Alternativ oder ergänzend können die Rohrabschnitte an das Containerdach angeschweißt sein. In weiteren Beispielen kann die Mäanderstruktur des zweiten Rohrleitungsteilkreises 54 schräg zur Längserstreckung des Containers 14 verlaufende Rohrabschnitte besitzen. Des Weiteren kann auch der erste Rohrleitungsteilkreis 40 in einigen Ausführungsbeispielen mäanderförmig an dem Containerdach des ersten Containers 12 verlaufen.

In Fig. 6 ist in einer vereinfachten Darstellung eine vorteilhafte Dockingstation 150 dargestellt. Die Dockingstation 150 ist dazu eingerichtet, den ersten Rohrleitungsteilkreis 40 und den zweiten Rohrleitungsteilkreis 54 mit wenigen Handgriffen zu koppeln. In einem Ausführungsbeispiel sind die beiden freien Enden des Rohrleitungsteilkreises 40 in einem ersten gemeinsamen Halter 152 gehalten. Die beiden freien Enden des zweiten Rohrleitungsteilkreises 54 sind in einem gemeinsamen Gegenhalter 154 gehalten. In dem hier dargestellten Ausführungsbeispiel besitzt der Gegenhalter beispielsweise Gewindezapfen 156, die in entsprechende Gewindebohrungen 158 des Halters 152 eingesteckt und/oder eingeschraubt werden können. Mit dem Verbinden der beiden Halter 152, 154 werden zugleich die Koppelanschlüsse 52, 56 und 64, 66 gekoppelt und der erste Rohrleitungskreis 72 geschlossen. Es ist möglich, dass die Kopplung der Rohrleitungsteilkreise 40, 54 mit Hilfe von flexiblen Schläuchen erfolgt, deren Enden als Dockingstation entsprechend Fig. 6 ausgebildet ist.

In einigen Ausführungsbeispielen können die Halter 152, 154 weitere Koppelanschlüsse, wie etwa die Koppelanschlüsse 88 und 98 beinhalten, die zu dem zweiten Rohrleitungskreis 84 und der Rohrleitung 96 (Desinfektionsleitung) gehören. In diesen bevorzugten Ausführungsbeispielen ist die Dockingstation 150 folglich in der Lage, mehrere Rohrleitungskreise des Containergebäudes 10 mit einer gemeinsamen Koppelbewegung zu koppeln. Alternativ oder ergänzend zu einer mechanischen Verbindung mithilfe von Gewindezapfen 156 und Gewindebohrungen 158 können die Halter 152, 154 Bajonettverschlüsse, Zughaken und dazu passende Zugösen oder andere lösbare Befestigungselemente aufweisen, die dazu eingerichtet sind, die Koppelanschlüsse 52, 56, 64, 66 flüssigkeitsdicht miteinander zu koppeln.

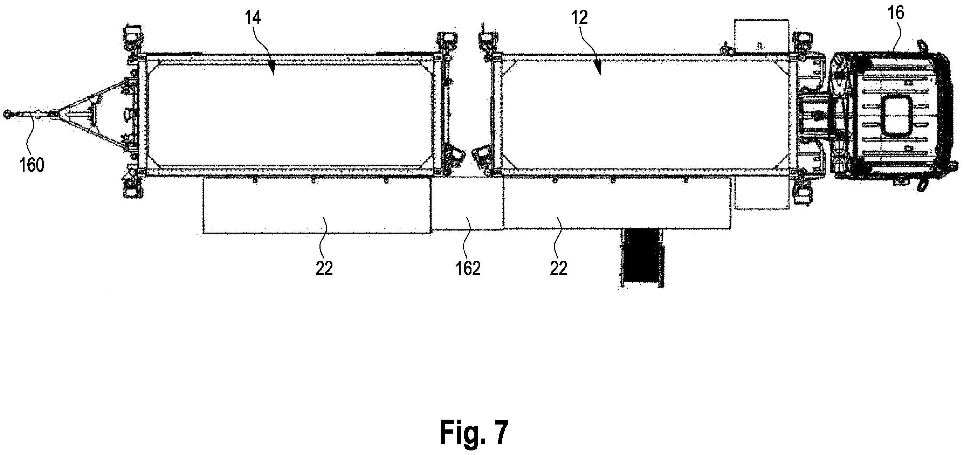

In den Fig. 7 bis 9 sind weitere vorteilhafte Aufstellvarianten dargestellt, in denen die Container 12, 14 relativ zueinander an einem Einsatzort positioniert werden können. Gleiche Bezugszeichen bezeichnen dabei dieselben Elemente wie zuvor.

Gemäß Fig. 7 ist es in einigen vorteilhaften Ausführungsbeispielen möglich, die Container 12, 14 in Längsrichtung hintereinander anzuordnen, wobei die Container 12, 14 gewissermaßen entlang einer gemeinsamen Längsachse positioniert sind. In einigen bevorzugten Ausführungsbeispielen wird der erste Container 12 von derjenigen schmalen Containerseite des Containers 14 positioniert, die von der Anhängerkupplung 160 entfernt liegt. Vorteilhaft bilden die nach oben zu öffnenden Klappen 22 hier zusammen mit einem lösbaren Zwischenstück 162 einen durchgehenden Dachüberstand.

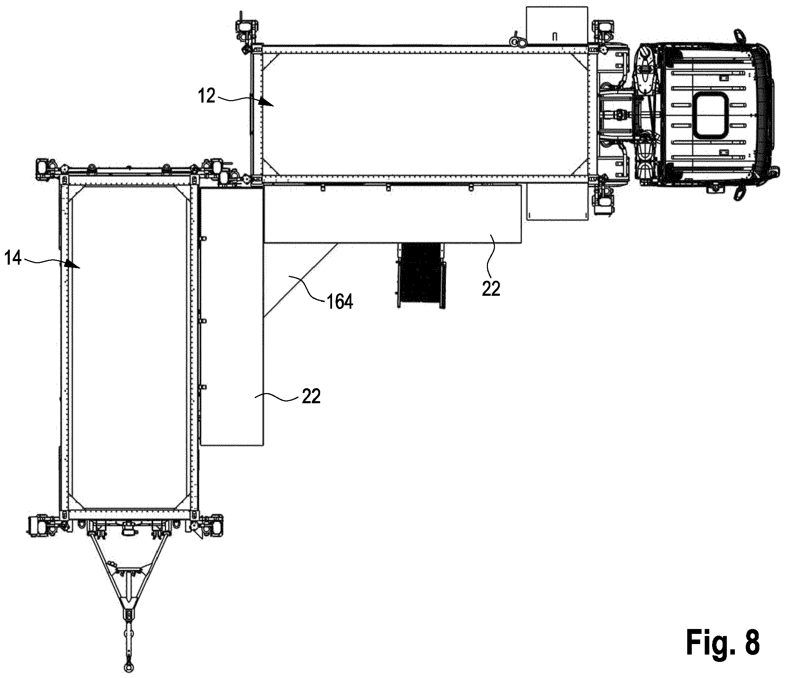

Gemäß Fig. 8 können die Container 12, 14 in weiteren bevorzugten Ausführungsbeispielen L-förmig zueinander positioniert werden. Vorteilhaft bilden die Klappen 22 auch hier zusammen mit einem Ergänzungsstück 164 einen gemeinsamen Dachüberstand, der es einer Person möglich macht, "trockenen Fußes" von einem Container in den anderen zu gehen.

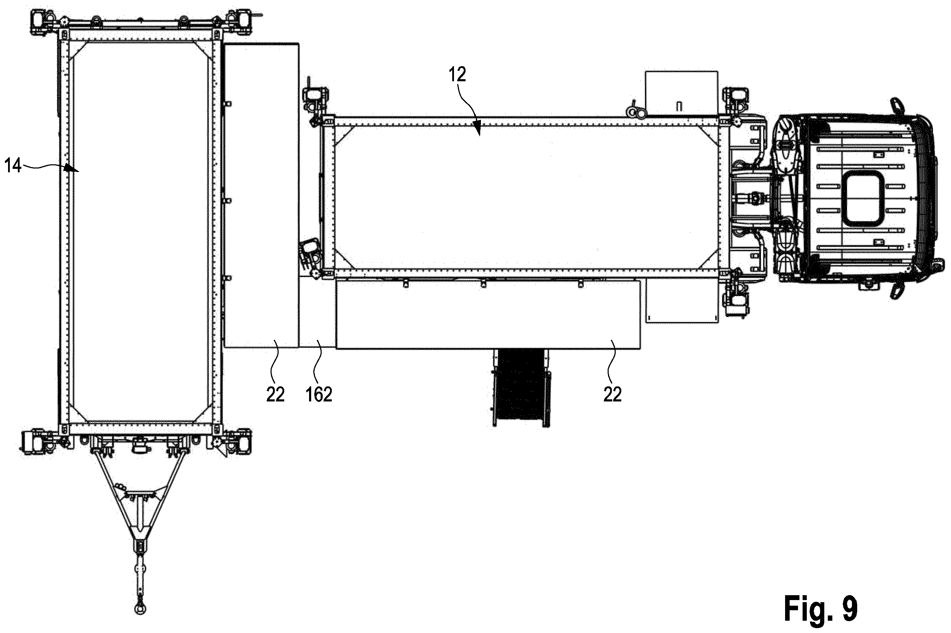

Gemäß Fig. 9 können die Container 12, 14 in einem weiteren Ausführungsbeispiel T-förmig zueinander positioniert werden, wobei auch hier die Klappen 22 zusammen mit einem Zwischenstück 162 einen gemeinsamen Dachüberstand bilden.

In einigen bevorzugten Ausführungsbeispielen werden die Rohrleitungsteilkreise 40, 54 mithilfe von flexiblen, schlauchartigen Verbindungsleitungen zu dem ersten Rohrleitungskreis 72 gekoppelt. Auch die weiteren elektrischen und fluidischen Verbindungen zwischen dem ersten Container 12 und dem zweiten Container 14 können in bevorzugten Ausführungsbeispielen mit flexiblen, schlauch- bzw. kabelartigen Leitungen hergestellt werden. Dies macht es möglich, die Container 12, 14 wahlweise in einer der in den Fig. 1, 2, 7, 8 und 9 dargestellten Positionen relativ zueinander anzuordnen, wobei eine jeweils geeignete Relativposition in Abhängigkeit von dem jeweiligen Einsatzort gewählt werden kann.

Insgesamt bietet das neue Containergebäude insbesondere mit dem hier dargestellten Aufbau als Feldküche einen energieeffizienten und komfortablen Betrieb an einem Einsatzort.

## Patentansprüche

1. Transportables, modulares Containergebäude für militärische und/oder humanitäre Feldeinsätze, insbesondere als containerbasierte Feldküche, mit einem ersten und einem zweiten begehbaren Container (12, 14), die in zumindest einer definierten Ausrichtung relativ zueinander an einem Einsatzort positionierbar sind, mit einem Stromerzeugungsaggregat (34) mit einer Verbrennungskraftmaschine (36) **dadurch gekennzeichnet, dass** das Containergebäude ferner umfasst:
- einen ersten Wärmetauscher (38), der mit der Verbrennungskraftmaschine (36) thermisch gekoppelt ist, wobei das Stromerzeugungsaggregat (34) mit der Verbrennungskraftmaschine (36) und dem ersten Wärmetauscher (38) in dem ersten Container (12) montiert ist,
- eine brennerbetriebene Standheizung (46),
- einen nemmit Flüssigkeit gefüllten ersten Rohrleitungskreis (72), an den der erste Wärmetauscher (38) und die Standheizung (46) angeschlossen sind, um die Flüssigkeit zu erhitzen, wobei der erste Rohrleitungskreis (72) einen ersten Rohrleitungsteilkreis (40) aufweist, der in dem ersten Container (12) montiert ist, und einen zweiten Rohrleitungsteilkreis (54), der in dem zweiten Container (14) montiert ist, und wobei der erste Rohrleitungsteilkreis (46) und der zweite Rohrleitungsteilkreis (54) jeweils zwei Koppelanschlüsse (52, 56, 64, 66) aufweisen, über die der erste Rohrleitungsteilkreis (40) und der zweite Rohrleitungsteilkreis (54) lösbar zu einem ersten Gesamtkreis koppelbar sind, wenn der erste und der zweite Container (12, 14) an dem Einsatzort positioniert sind,
- eine erste Pumpe (70), die in dem ersten Rohrleitungskreis (72) angeordnet und dazu eingerichtet ist, die Flüssigkeit in dem ersten Rohrleitungskreis (72) zu zirkulieren, wobei die erste Pumpe (70) mit dem Stromerzeugungsaggregat (34) elektrisch verbunden ist,
- einen Frischwassertank (82a, 82b) zum Bereitstellen von Frischwasser,
- einen einem Frischwasserauslass (100), der in dem zweiten Container (14) montiert ist,
- einen zweiten Rohrleitungskreis (84), der den Frischwassertank (82a, 82b) und den Frischwasserauslass (100) verbindet, und
- einen zweiten Wärmetauscher (58), der in dem ersten Rohrleitungskreis (72) und in dem zweiten Rohrleitungskreis (84) angeordnet ist, um Frischwasser aus dem Frischwassertank (82a, 82b) mithilfe der Flüssigkeit aus dem ersten Rohrleitungskreis (72) aufzuheizen.

2. Containergebäude nach Anspruch 1, ferner mit zumindest einer Bypass-Rohrleitung (128), die dazu eingerichtet ist, den ersten oder den zweiten Rohrleitungsteilkreis (40, 54) kurzzuschließen.

3. Containergebäude nach Anspruch 1 oder 2, ferner mit einer wiederaufladbaren Pufferbatterie (78), insbesondere in Form einer unterbrechungsfreien Stromversorgung, die mit dem Stromerzeugungsaggregat (34) elektrisch verbunden ist.

4. Containergebäude nach Anspruch 3, ferner mit einem Photovoltaikmodul (80) und/oder einem Windgenerator, das bzw. der elektrisch mit der Pufferbatterie (78) verbunden ist.

5. Containergebäude nach einem der Ansprüche 1 bis 4, wobei zumindest einer der Container (12, 14) ein Containerdach (134) und/oder eine Containerwand (148) besitzt, und wobei zumindest einer der Rohrleitungsteilkreise (40, 54) im Bereich des Containerdaches und/oder der Containerwand montiert ist und vorzugsweise im Bereich des Containerdaches (134) und/oder der Containerwand mäanderförmig verläuft.

6. Containergebäude nach einem der Ansprüche 1 bis 5, ferner mit einem separaten Solarthermiemodul (76), das an den ersten Rohrleitungskreis (72) angeschlossen ist.

7. Containergebäude nach einem der Ansprüche 1 bis 6, ferner mit einer Wärmepumpe (74), insbesondere einer Luft-Luft-Wärmepumpe, die an den ersten Rohrleitungskreis (72) angeschlossen ist.

8. Containergebäude nach einem der Ansprüche 1 bis 7, ferner mit zumindest einem Luftheizgerät (62), das an den ersten Rohrleitungskreis (72) angeschlossen ist.

9. Containergebäude nach einem der Ansprüche 1 bis 8, wobei die brennerbetriebene Standheizung (46) und/oder der Frischwassertank (82a, 82b) in dem ersten Container (12) montiert ist.

10. Containergebäude nach einem der Ansprüche 1 bis 9, wobei der zweite Wärmetauscher (58) in dem zweiten Container (14) montiert ist.

11. Containergebäude nach einem der Ansprüche 1 bis 10, ferner mit einem Heißwasserkochgerät (102), das im Bereich des Frischwasserauslasses (100) in dem zweiten Container (14) montiert ist, wobei das Heißwasserkochgerät (102) vorzugsweise einen integrierten Brenner (104) besitzt.

12. Containergebäude nach einem der Ansprüche 1 bis 11, ferner mit zumindest einem der folgenden Küchengeräte: Spülbecken (106, 108), Spülmaschine (112), Bratgerät, Grillgerät und/oder Kombidämpfer (110), wobei das zumindest eine Küchengerät in dem zweiten Container (14) angeordnet ist und/oder mit dem zweiten Rohrleitungskreis (84) verbunden ist.

13. Containergebäude nach einem der Ansprüche 1 bis 12, ferner mit zumindest einem Kühlschrank (132), der vorzugsweise in dem ersten Container (14) angeordnet ist.

14. Containergebäude nach einem der Ansprüche 1 bis 13, wobei die Koppelanschlüsse (52, 56, 64, 66) des ersten Rohrleitungsteilkreises (40) und/oder des zweiten Rohrleitungsteilkreises (54) jeweils räumlich nebeneinander in einer Dockingstation (150) angeordnet sind.

15. Containergebäude nach einem der Ansprüche 1 bis 14, ferner mit einer weiteren Rohrleitung (96), die den zweiten Wärmetauscher (54) mit dem Frischwassertank (82a, 82b) verbindet.

## Claims

1. A transportable modular container building for military and/or humanitarian field operations, in particular as a container-based field kitchen, comprising a first and a second walk-in container (12, 14) which can be positioned in at least one defined orientation relative to one another at a deployment site, comprising a power generating unit (34) with an internal combustion engine (36),
**characterized in that** the container building further comprises:
a first heat exchanger (38) which is thermally coupled to the combustion engine (36), wherein the power generating unit (34) with the internal combustion engine (36) and the first heat exchanger (38) is arranged in the first container (12),
a burner operated parking heater (46),
a first pipeline circuit (72) filled with liquid, to which the first heat exchanger (38) and the parking heater (46) are connected to heat the liquid, wherein the first pipeline circuit (72) comprises a first pipeline subcircuit (40) arranged in the first container (12) and a second pipeline subcircuit (54) arranged in the second container (14), and wherein the first pipeline subcircuit (46) and the second pipeline subcircuit (54) each have two coupling ports (52, 56, 64, 66) through which the first pipeline subcircuit (40) and the second pipeline subcircuit (54) are releasably connectable to form a first overall circuit, when the first and second containers (12, 14) are positioned at the deployment site,
a first pump (70) arranged in the first pipeline circuit (72) and configured to circulate the fluid in the first pipeline circuit (72), with the first pump (70) being electrically connected to the power generating unit (34),
a fresh water tank (82a, 82b) for providing fresh water,
a fresh water outlet (100) mounted in the second container (14),
a second pipeline circuit (84) connecting the fresh water tank (82a, 82b) and the fresh water outlet (100), and
a second heat exchanger (58) arranged in the first pipeline circuit (72) and the second pipeline circuit (84) for heating fresh water from the fresh water tank (82a, 82b) using the liquid from the first pipeline circuit (72).

2. The container building according to claim 1, further comprising at least one bypass pipeline (128) configured to short-circuit the first or second pipeline subcircuit (40, 54).

3. The container building according to claim 1 or 2, further comprising a rechargeable buffer battery (78), in particular in the form of an uninterruptible power supply, which buffer battery is electrically connected to the power generating unit (34).

4. The container building according to claim 3, further comprising a photovoltaic module (80) and/or a wind generator electrically connected to the buffer battery (78).

5. The container building according to any one of claims 1 to 4, wherein at least one of the containers (12, 14) has a container roof (134) and/or a container wall (148), and wherein at least one of the pipeline subcircuits (40, 54) is arranged in the region of the container roof and/or the container wall and preferably runs in a meandering manner in the region of the container roof (134) and/or the container wall.

6. The container building according to any one of claims 1 to 5, further comprising a separate solar thermal module (76) connected to the first pipeline circuit (72).

7. The container building according to any one of claims 1 to 6, further comprising a heat pump (74), in particular an air-to-air heat pump, connected to the first pipeline circuit (72).

8. The container building according to any one of claims 1 to 7, further comprising at least one air heater (62) connected to the first pipeline circuit (72).

9. The container building according to any one of claims 1 to 8, wherein the burner-operated parking heater (46) and/or the fresh water tank (82a, 82b) is arranged in the first container (12).

10. The container building according to any one of claims 1 to 9, wherein the second heat exchanger (58) is arranged in the second container (14).

11. The container building according to any one of claims 1 to 10, further comprising a hot water boiling device (102) arranged in the second container (14) in the area of the fresh water outlet (100), wherein the hot water boiling device (102) preferably has an integrated burner (104).

12. The container building according to any one of claims 1 to 11, further comprising at least one of the following kitchen appliances: sink (106, 108), dishwasher (112), fryer, grill and/or combi steamer (110), wherein the at least one kitchen appliance is arranged in the second container (14) and/or is connected to the second pipeline circuit (84).

13. The container building according to any one of claims 1 to 12, further comprising at least one refrigerator (132) preferably arranged in the first container (14).

14. The container building according to any one of claims 1 to 13, wherein the coupling ports (52, 56, 64, 66) of the first pipeline subcircuit (40) and/or the second pipeline subcircuit (54) are each arranged spatially adjacent to one another in a docking station (150).

15. The container building according to any one of claims 1 to 14, further comprising a further pipeline (96) connecting the second heat exchanger (54) to the fresh water tank (82a, 82b).

## Revendications

1. Bâtiment en conteneurs transportable et modulaire pour des opérations de terrain militaires et/ou humanitaires, en particulier en tant que cuisine de campagne basée sur conteneurs, comportant un premier et un deuxième conteneur accessible (12, 14), qui peuvent être positionnés dans au moins une orientation définie l'un par rapport à l'autre sur un site d'utilisation, comportant un groupe électrogène (34) doté d'un moteur à combustion interne (36), **caractérisé en ce que** le bâtiment en conteneurs comporte en outre :
- un premier échangeur de chaleur (38), qui est couplé thermiquement au moteur à combustion interne (36), le groupe électrogène (34) étant monté avec le moteur à combustion interne (36) et le premier échangeur de chaleur (38) dans le premier conteneur (12),
- un chauffage auxiliaire (46) à brûleur,
- un premier circuit de conduites tubulaires (72) rempli de liquide, circuit auquel le premier échangeur de chaleur (38) et le chauffage auxiliaire (46) sont raccordés, afin de réchauffer le liquide, le premier circuit de conduites tubulaires (72) présentant un premier circuit partiel de conduites tubulaires (40), qui est monté dans le premier conteneur (12), et un deuxième circuit partiel de conduites tubulaires (54), qui est monté dans le deuxième conteneur (14), et le premier circuit partiel de conduites tubulaires (46) et le deuxième circuit partiel de conduites tubulaires (54) présentant respectivement deux raccords d'accouplement (52, 56, 64, 66), par le biais desquels le premier circuit partiel de conduites tubulaires (40) et le deuxième circuit partiel de conduites tubulaires (54) peuvent être accouplés de manière détachable pour former un premier circuit global, lorsque le premier et le deuxième conteneur (12, 14) sont positionnés sur le site d'utilisation,
- une première pompe (70), qui est disposée dans le premier circuit de conduites tubulaires (72) et est conçue pour faire circuler le liquide dans le premier circuit de conduites tubulaires (72), la première pompe (70) étant connectée électriquement au groupe électrogène (34),
- un réservoir d'eau fraîche (82a, 82b) pour la fourniture d'eau fraîche,
- une sortie d'eau fraîche (100), qui est montée dans le deuxième conteneur (14),
- un deuxième circuit de conduites tubulaires (84), qui connecte le réservoir d'eau fraîche (82a, 82b) et la sortie d'eau fraîche (100), et
- un deuxième échangeur de chaleur (58), qui est disposé dans le premier circuit de conduites tubulaires (72) et dans le deuxième circuit de conduites tubulaires (84) afin de chauffer de l'eau fraîche provenant du réservoir d'eau fraîche (82a, 82b) à l'aide du liquide provenant du premier circuit de conduites tubulaires (72).

2. Bâtiment en conteneurs selon la revendication 1, comportant en outre au moins une conduite tubulaire de dérivation (128), qui est conçue pour court-circuiter le premier ou le deuxième circuit partiel de conduites tubulaires (40, 54).

3. Bâtiment en conteneurs selon la revendication 1 ou 2, comportant en outre une batterie tampon rechargeable (78), en particulier sous la forme d'une alimentation en courant ininterrompue qui est connectée électriquement au groupe électrogène (34).

4. Bâtiment en conteneurs selon la revendication 3, comportant en outre un module photovoltaïque (80) et/ou un aérogénérateur, qui est connecté électriquement à la batterie tampon (78).

5. Bâtiment en conteneurs selon l'une des revendications 1 à 4, au moins l'un des conteneurs (12, 14) possédant un toit de conteneur (134) et/ou une paroi de conteneur (148), et au moins l'un des circuits partiels de conduites tubulaires (40, 54) étant monté dans la région du toit de conteneur et/ou de la paroi de conteneur et s'étendant de manière sinueuse de préférence dans la région du toit de conteneur (134) et/ou de la paroi de conteneur.

6. Bâtiment en conteneurs selon l'une des revendications 1 à 5, comportant en outre un module héliothermique séparé (76), qui est raccordé au premier circuit de conduites tubulaires (72).

7. Bâtiment en conteneurs selon l'une des revendications 1 à 6, comportant en outre une pompe à chaleur (74), en particulier une pompe à chaleur air-air, qui est raccordée au premier circuit de conduites tubulaires (72).

8. Bâtiment en conteneurs selon l'une des revendications 1 à 7, comportant en outre au moins un aérotherme (62), qui est raccordé au premier circuit de conduites tubulaires (72).

9. Bâtiment en conteneurs selon l'une des revendications 1 à 8, le chauffage auxiliaire (46) à brûleur et/ou le réservoir d'eau fraîche (82a, 82b) étant montés dans le premier conteneur (12).

10. Bâtiment en conteneurs selon l'une des revendications 1 à 9, le deuxième échangeur de chaleur (58) étant monté dans le deuxième conteneur (14).

11. Bâtiment en conteneurs selon l'une des revendications 1 à 10, comportant en outre un appareil de cuisson à eau chaude (102), qui est monté dans la région de la sortie d'eau fraîche (100) dans le deuxième conteneur (14), l'appareil de cuisson à eau chaude (102) possédant de préférence un brûleur (104) intégré.

12. Bâtiment en conteneurs selon l'une des revendications 1 à 11, comportant en outre au moins l'un des appareils de cuisine suivants : évier (106, 108), lave-vaisselle (112), appareil pour rôtir, appareil pour griller et/ou four à vapeur combiné (110), l'au moins un appareil de cuisine étant disposé dans le deuxième conteneur (14) et/ou étant connecté au deuxième circuit de conduites tubulaires (84).

13. Bâtiment en conteneurs selon l'une des revendications 1 à 12, comportant en outre au moins un réfrigérateur (132), qui est disposé de préférence dans le premier conteneur (14).

14. Bâtiment en conteneurs selon l'une des revendications 1 à 13, les raccords d'accouplement (52, 56, 64, 66) du premier circuit partiel de conduites tubulaires (40) et/ou du deuxième circuit partiel de conduites tubulaires (54) étant disposés respectivement spatialement les uns à côté des autres dans une station d'arrimage (150).

15. Bâtiment en conteneurs selon l'une des revendications 1 à 14, comportant en outre une autre conduite tubulaire (96), qui connecte le deuxième échangeur de chaleur (54) au réservoir d'eau fraîche (82a, 82b).
